# EUROPÄISCHE PATENTSCHRIFT

(11) **EP 2 453 443 B1**
(45) Veröffentlichungstag und Bekanntmachung des Hinweises auf die Patenterteilung: **30.07.2014**
(21) Anmeldenummer: 11008260.9
(22) Anmeldetag: 13.10.2011
(51) Int. Cl.: G21C 17/00, G21C 17/10, G21C 17/06

(54) **Kugelmesssystem sowie entsprechendes Messverfahren**
Ball measuring system and measurement method
Système de mesure à billes associées ainsi que procédé de mesure correspondant

(30) Priorität: 11.11.2010 DE 102010051062
(43) Veröffentlichungstag der Anmeldung: 16.05.2012
(73) Patentinhaber: AREVA GmbH, 91052 Erlangen (DE)
(72) Erfinder: Wistuba, Lothar, 91074 Herzogenaurach (DE); Kiel, Peter, 63654 Büdingen (DE); Reeb, Bernard, 91058 Erlangen (DE)
(74) Vertreter: Kugler, Jörg

(56) Entgegenhaltungen:
- EP-A1- 1 126 476
- JP-A- 4 062 498
- JP-A- 8 136 656
- US-A1- 2008 101 533

## Beschreibung

Die Erfindung betrifft ein Kugelmesssystem in einer kerntechnischen Anlage. Sie betrifft weiterhin ein Verfahren zur Messung der Strahlungsverteilung an einer Mehrzahl von radioaktiv aktivierten Kugelsäulen eines derartigen Kugelmesssystems.

JP 8136656 A zeigt (Zusammenfassung, Abb. 1, 5, 6) eine Detektoranordnung, die zwei Matrizen von Strahlungsdetektoren (60, 60') umfasst, welche an einem Balken (13) befestigt sind. Die Detektoranordnung ist an einer Halterung (20) bezüglich einer Sitzfläche höhenverstellbar befestigt und wird von einem Prozessor (30) angesteuert.

US 2008/101533 A1 zeigt (Absätze [0016 - 0023], Abb. 1, 2, 4) einen CT-Scanner, der zwei an einer Plattform (12) angeordnete Strahlungsdetektoren (18A, 188) aufweist. Der Scanner ist mittels Rollen bezüglich einer Liege verschiebbar. Während der Datenaufnahme wird die Rotation der Plattform von einer Kontrollvorrichtung (32) gesteuert.

JP 462498 A zeigt (Zusammenfassung, Abb. 2) eine Mehrzahl von Neutronendetektoren (5), die bezüglich eines Reaktorkerns (2) verschiebbar gelagert sind.

EP 1126476 A1 zeigt (Absatz [0023]) einen Reaktor, in dem Rohrleitungen vorgesehen sind, die beispielsweise metallische Kugeln enthalten. Durch schnelle Reaktorneutronen werden in diesen Kugeln weitere Neutronen erzeugt, die in einer Detektoranordnung nachweisbar sind.

In einer kerntechnischen Anlage, beispielsweise in einer Kernkraftwerksanlage mit einem Druckwasserreaktor wie in EP 1126476 A, werden so genannte Kugelmesssysteme verwendet, um die Leistungsdichteverteilung der Strahlung im Reaktorkern zu messen. Dabei werden Kügelchen aus aktivierbarer Materie, beispielsweise aus Vanadium, mit einem charakteristischen Durchmesser in einem Bereich von unter einem Millimeter bis wenigen Millimetern an vorgegebenen Positionen im Reaktorkern in Röhren parallel zu den Kernbrennstäben eingefüllt, so dass die Kügelchen in den Röhren unmittelbar an- bzw. aufeinander liegen und jede Kugel genau einer Längskoordinate der benachbarten Kernbrennstäbe zugeordnet ist. Die Kugeln werden durch die von den Kernbrennstäben emittierte Strahlung aktiviert und danach in Röhren des Kugelmesssystems aus dem Reaktorkernbereich auf den Messtisch (Detektionsbereich) transportiert, wobei die Reihenfolge der Kugeln erhalten bleibt, weil die Röhren ein in sich geschlossenes System bilden.

Die Röhren des Kugelmesssystems haben einen mit den Röhren im Reaktorkern vergleichbaren Durchmesser, so dass die Kugeln in den Röhren unmittelbar aneinander anliegen und jede Kugel an genau einer Längskoordinate in der jeweiligen Röhre liegt. Jede Röhre des Kugelmesssystems ist genau einer Röhre im Reaktorkern zugeordnet. Die Röhren des Kugelmesssystems sind parallel zueinander auf einem Messtisch angeordnet und bilden einen Detektionsbereich für eine Detektoranordnung mit einer Mehrzahl von Detektoren. Über jeder Röhre des Kugelmesssystems sind in gleichem Abstand zueinander mehrere Detektoren angeordnet. Die von den Kugeln abgegebene Strahlung wird von den Detektoren gemessen. Die von jeder Kugel abgegebene Strahlung korrespondiert eindeutig zu einer Strahlungsleistung des oder der durch die jeweilige Messröhre abgebildeten Kernbrennstabes bzw. Kernbrennstäbe an der durch die Position der Kugel in der Messröhre abgebildeten Längskoordinate. Durch den Abstand der Detektoren entlang der jeweiligen Messröhre zueinander ist somit die Auflösung der Strahlungsverteilungsmessung des Kugelmesssystems bestimmt.

Ein Nachteil eines derartigen Detektorsystems ist darin begründet, dass eine hohe Anzahl von Detektoren erforderlich ist, um eine Messung der Leistungsdichteverteilung mit möglichst hoher Ortsauflösung zu erreichen. Falls ein Detektor ausfällt, so muss dieser Detektor ausgewechselt werden, was einen Zugang zum Kontrollbereich des Reaktors erforderlich macht. Weiterhin ist zur Kalibrierung der Detektoren ein Zugang zum Kontrollbereich erforderlich.

Aufgabe der Erfindung ist es, ein Kugelmesssystem mit einem Detektorsystem zur Erfassung der Leistungsdichte in einem Reaktorkern anzugeben, welches möglichst wartungsarm ist, und welches bei einfach gehaltener Bauweise möglichst genau und zuverlässig und zugleich ausfallsicher ist. Weiterhin soll ein entsprechendes Messverfahren angegeben werden.

Die auf die Vorrichtung bezogene Aufgabe wird erfindungsgemäß durch die Merkmale des Anspruchs 1 gelöst.

Die Erfindung geht von der Überlegung aus, mit Hilfe einer bezüglich des Detektionsbereiches verschiebbaren Detektoranordnung den Detektionsbereich mit einer wesentlich geringeren Anzahl von Detektoren erfassen zu können, als mit einer bezüglich des Detektionsbereiches ortsfesten Detektoranordnung möglich wäre, bei zugleich einer höheren räumlichen Auflösung der Messung. Die höhere räumliche Auflösung wird im Wesentlichen dadurch bewerkstelligt, dass die Strahlungsdetektoren relativ zu den Kugeln in den Messröhren verschiebbar sind, vorzugsweise kontinuierlich verschiebbar sind. Insbesondere kann somit mit vergleichsweise wenigen Detektoren nach Art einer zeitlich seriellen Messwertaufnahme an einer Mehrzahl festgelegter Messpunkte die Strahlung von jeder einzelnen Kugel gemessen werden.

Das Erfindungsprinzip beruht darauf, dass eine Aufnahme eines einzelnen Messwerts bzw. eine Einzelmessung an einem Detektor nur eine vergleichsweise geringe Messzeitdauer beansprucht, und dass ein durch das Verfahren bzw. Verschieben des Messbalkens bedingter geringfügiger Unterschied zwischen den zu unterschiedlichen räumlichen Positionen gehörigen jeweiligen Messzeitpunkten tolerierbar ist.

Die Anzahl der Detektoren wird so gewählt, dass sie einerseits hinreichend groß ist, um einen möglichst hohen Grad der Redundanz zu erreichen, und dass sie andererseits - im Vergleich zu einer ortsfesten Detektoranordnung - möglichst klein ist, um die Anzahl der Zugänge zum Kontrollbereich des Reaktors, die für den Austausch eines Detektors einer dort installierten Detektoranordnung erforderlich ist, so klein wie möglich zu halten.

Vorzugsweise ist die Messplattform der Detektoranordnung in Form eines Balkens ausgebildet, welcher entlang seiner Längsrichtung den Detektionsbereich überspannt, und welcher relativ zu dem Detektionsbereich querverschiebbar gelagert ist.

Die Messtische von Kugelmesssystemen sind zweckmäßigerweise in der Form eines Rechtecks ausgebildet, wobei parallel zur Längsrichtung des Messtisches die Messröhren mit den radioaktiv aktivierten Kugeln angeordnet sind. Die Längen der Messröhren sind im Wesentlichen durch die Längen der aktiven Zonen der den Messröhren jeweils zugeordneten Kernbrennstäbe im Reaktorkern vorgegeben. Bezüglich der Querrichtung sind die Messröhren zweckmäßigerweise jeweils in gleichem Abstand zueinander angeordnet. Die Wahl der Definition von Längs- und Querrichtung des Messtisches resultiert daraus, dass einerseits typischerweise die Summe der Abstände zwischen den Messröhren kleiner ist als die mittlere Länge der Messröhren, und andererseits die Ausrichtung der Messröhren eine definierende Richtung für das Kugelmesssystem darstellt. Da der Messtisch dem Detektionsbereich der einem Kugelmesssystem zugeordneten Detektoranordnung entspricht, korrespondiert die Längsrichtung der in Form eines Balkens ausgebildeten Messplattform somit der Querrichtung des Detektionsbereiches, und invers. Eine Querverschiebbarkeit der Messplattform relativ zu dem Detektionsbereich ist somit von der Bedeutung her äquivalent zu einer Verschiebbarkeit der Messplattform entlang der Längsrichtung des Detektionsbereiches, mithin entlang der Messröhren eines der Detektoranordnung zugeordneten Kugelmesssystems.

Erfindungsgemäß ist eine Mehrzahl von Detektoren auf der Messplattform in Form einer Matrix, insbesondere in Form eines regelmäßigen Gitters, gruppiert angeordnet. Dabei umfasst die Messplattform eine Mehrzahl von Detektoren für jede Längskoordinate der Messplattform. Durch die Verschiebbarkeit der Messplattform relativ zum Detektionsbereich steht somit diese Mehrzahl von Detektoren für jede Längskoordinate des Detektionsbereiches zur Verfügung. Damit wird eine Redundanz erreicht, die in dieser Form bei einer Detektoranordnung mit ortsfest installierten Detektoren nicht existiert. Einerseits nämlich kann die Messung eines Detektors durch weitere Detektoren validiert werden, und andererseits kann bei Ausfall eines Detektors die Messfunktion durch andere Detektoren übernommen werden. Zugänge zum Kontrollraum zum Zweck der Reparatur und/oder des Austausches können somit in gebündelter Form stattfinden und sind nicht zwingend schon dann erforderlich, wenn nur ein Detektor ausfällt.

Weiterhin ist in einer vorteilhaften Ausgestaltung der Detektoranordnung ein Behälter oder ein Gehäuse zur Aufnahme und zum Transport von Instrumenten mit der Messplattform verbunden. Ein solcher Behälter dient beispielsweise zur Aufnahme der Steuereinheit sowie von Leitungen zwischen den Detektoren und der Steuereinheit, die hinderlich wären, wenn sie direkt zwischen den Detektoren auf der Messplattform und einem ortsfesten Anschlusspunkt gelegt wären. Die Steuereinheit kann auch als kombinierte Auswerte- und Steuereinheit ausgeführt sein, die einerseits Steuersignale an zugehörige Antriebsmittel (Schrittmotoren etc.) zum Verfahren der Messplattform mit den Detektoren ausgibt, und in der andererseits die Messsignale der einzelnen Detektoren zusammenlaufen und ausgewertet bzw. für eine spätere externe Auswertung geeignet aufbereitet werden.

Zweckmäßigerweise ist die Messplattform in eine Position verschiebbar, die bezüglich der Verschiebungsrichtung der Messplattform außerhalb des Detektionsbereiches angeordnet ist (Parkposition oder Kalibrierposition). Dies ermöglicht insbesondere einen vereinfachten Zugang zu der Messplattform, insbesondere zum Zwecke einer Entnahme und/oder eines Austausches von Detektoren.

In einer geeigneten Weiterbildung der letztgenannten Ausführungsvariante der Detektoranordnung ist die Position bezüglich der Verschiebungsrichtung der Messplattform eine Endposition. Dies stellt eine besonders einfache Ausführung dar, bei welcher gegenüber der eingangs genannten Verschiebungsrichtung der Messplattform bezüglich des Detektionsbereiches keine zusätzlichen Freiheitsgrade der Verschiebbarkeit der Messplattform erforderlich sind.

Darüber hinaus ist zweckmäßigerweise die Position als Eichposition zur Eichung oder Kalibrierung von zumindest einem Detektor vorgesehen. Dies ist im Vergleich zu einer Detektoranordnung mit ortsfest installierten Detektoren besonders vorteilhaft, da bei einer solchen Detektoranordnung eine Eichung (Kalibrierung) eines oder jedes Detektors durch Personal durchgeführt werden muss, womit zusätzliche Zugänge in den Kontrollbereich erforderlich sind. Sind jedoch die Detektoren in einen Bereich außerhalb des Detektionsbereiches überführbar, so ist eine einfache und automatische Eichung möglich, da keine Reststrahlungsmengen aus dem Detektionsbereich eine vollautomatische Eichung verfälschen können.

In einer weiteren, geeigneten Ausführung des Detektorsystems ist die Steuereinheit zur vollautomatischen Durchführung einer Messsequenz ausgebildet. Eine derartige Messsequenz umfasst insbesondere eine Anzahl von Messpositionen der Messplattform und eine Anzahl von Fahrgeschwindigkeiten der Messplattform zwischen den jeweiligen Messpositionen und gegebenenfalls die Auswahl einer Anzahl von Messparametern eines oder jedes Detektors an der jeweiligen Messposition.

Insbesondere umfassen die möglichen und anwählbaren Fahrgeschwindigkeiten der Messplattform einen Bereich um ca. 10 cm/s. Innerhalb dieses Geschwindigkeitsbereiches kann eine Messsequenz recht genau durchgeführt und zugleich recht schnell abgeschlossen werden.

Weiterhin ist vorteilhafterweise die Eichung (Kalibrierung) eines oder jedes Detektors und das dafür erforderliche Verfahren der Messplattform in die Eichposition als Teilsequenz einer vollautomatisch durchgeführten Messsequenz vorgesehen.

Zweckmäßigerweise ist die die Detektoren aufnehmende Messplattform entlang von Schienen geführt, die durch ihre Ausrichtung die gewünschte Verschiebbarkeit der Detektoren in Längsrichtung der Messröhren gewährleisten. Als Verstellanrieb kommt zweckmäßigerweise ein elektrischer Antrieb, beispielsweise mit einem Schrittmotor, zum Einsatz. Bevorzugt ist eine sensorische Erfassung der aktuellen Ist-Position der Messplattform vorgesehen, anhand derer eine Kontrolle und gegebenenfalls Korrektur der Ist-Position gegenüber der vorgebebenen Soll-Position durchführbar ist.

Die auf das Verfahren bezogene Aufgabe wird schließlich durch die Merkmale des Anspruchs 7 gelöst. In einer vorteilhaften Ausgestaltung des Verfahrens ist vorgesehen, dass zumindest einer der Detektoren beim Verschieben der Messplattform die von den Kugeln abgegebene Strahlung kontinuierlich über einen ausgedehnten Längsabschnitt, vorzugsweise über die gesamte Länge, der ihm zugeordneten Messröhre erfasst. Da die Messpositionen der Detektoren kontinuierlich variierbar und nicht auf einzelne diskrete Messplätze beschränkt sind, und da jede der Kugeln in der Messröhre charakteristisch für die Strahlungseigenschaften an einer ihr eindeutig zugeordneten Längsposition eines Kernbrennstabes im Kernreaktor ist, können somit beispielsweise auch diejenigen Positionen vermessen werden, an denen sich Abstandshalter zwischen den üblicherweise zu Brennstabbündeln zusammengefassten Brennstäben befinden.

Nachfolgend wird ein Ausführungsbeispiel eines erfindungsgemäßen Detektorsystems anhand einer Zeichnung dargestellt.

Dabei zeigen jeweils in schematischen Darstellungen:
- FIG. 1: ein Detektorsystem, mit einer verschiebbaren Messplattform über einem dazugehörigen Kugelprobenystem in einer Ansicht von oben, und
- FIG. 2: das Detektorsystem 1 mit dem dazugehörigen Kugelprobensystem nach FIG. 1 in einer Endposition.

In den Figuren sind einander entsprechende Teile mit identischen Bezugszeichen versehen.

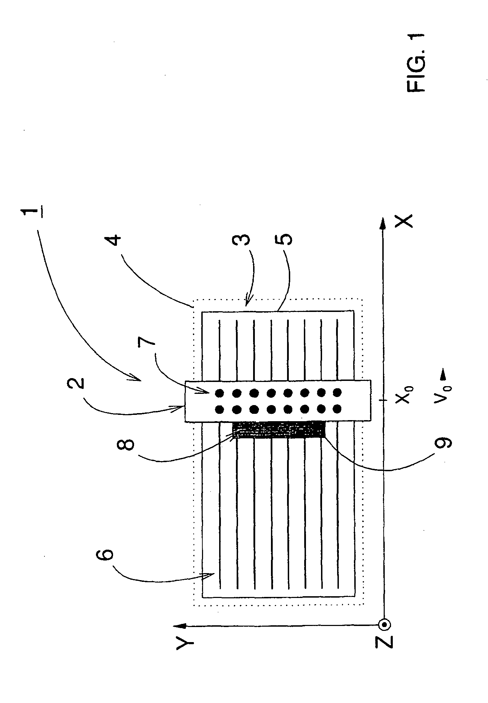

FIG. 1 zeigt ein Detektorsystem 1 mit einer verschiebbaren Messplattform 2 über einem dazugehörigen Kugelprobensystem 3 in einer Ansicht von oben. Das Detektorsystem 1 und das Kugelprobensystem 3 werden zusammen auch als Kugelmesssystem 10 bezeichnet. Die Messplattform 2 weist die Form eines Balkens auf und ist bezüglich eines Detektionsbereiches 4 entlang der Achsenrichtung X verschiebbar gelagert. Die Längsrichtung des Balkens entspricht der Achsenrichtung Y, somit ist die Messplattform 2 bezüglich des Detektionsbereiches 4 querverschiebbar gelagert. Der Detektionsbereich 4 umfasst einen Messtisch 5 des Kugelprobensystems 3. Auf dem Messtisch 5 sind parallel zu der Achsenrichtung X in regelmäßigen Abständen zueinander bezüglich der Achsenrichtung Y Messröhren 6 angeordnet. Die Messröhren 6, auf deren detaillierte Darstellung hier verzichtet wird, weisen einen Durchmesser von unter einem Millimeter bis wenigen Millimetern auf und sind zur Aufnahme von Kügelchen aus radioaktiv bestrahlbarem Material - beispielsweise Vanadium - ausgebildet, wobei in jeder Messröhre 6 die Kugeln linear aneinandergereiht zu liegen kommen. Zur Vereinfachung der Befüllung der Messröhren 6 können die Messröhren 6 bezüglich der Achsenrichtung Z leicht geneigt sein. Die Achsenrichtung Z zeigt in der vorliegenden Darstellung in Richtung des Beobachters.

Die Messplattform 2 umfasst eine Mehrzahl von Detektoren 7, die in Form einer Matrix gruppiert angeordnet sind. Die Detektoren 7 sind bezüglich der Achsenrichtung Z über den Messröhren 6 angeordnet, wobei jeder Messröhre 6 eine Mehrzahl - in der vorliegenden Darstellung zwei - Detektoren 7 zugeordnet sind, deren Koordinaten bezüglich der Achsenrichtung Y identisch sind mit der Koordinate der jeweiligen Messröhre bezüglich der Achsenrichtung Y. Durch die Verschiebbarkeit der Messplattform 2 können beide Detektoren 7, die einer Messröhre 6 zugeordnet sind, die Gesamtheit aller Längskoordinaten der Messröhre 6 bezüglich der Achsenrichtung X erfassen. Die Detektoren 7 messen und registrieren für jede vorgegebene Position X₀ der Messplattform 2 bezüglich der Achsenrichtung X die von den Kugeln in den Messröhren 6 abgegebene Strahlung und geben die aufgenommenen Daten an eine Auswerte- und Steuereinheit 8 weiter, die in einer an die Messplattform 2 angegliederten Instrumentenbox 9 untergebracht ist. Über die Auswerte- und Steuereinheit 8 kann eine Messsequenz vorgegeben sein, nach welcher vorgegebene Positionen X₀ mit vorgegebenen Geschwindigkeiten Vo abgefahren werden. Dazu sind entsprechende steuer- bzw. regelbare Antriebsmittel zum Verfahren der Messplattform 2 vorgesehen, die hier nicht näher dargestellt sind.

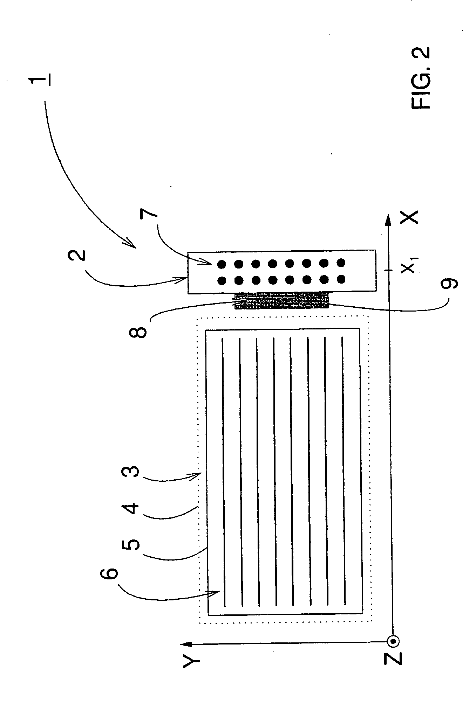

FIG. 2 zeigt das Detektorsystem 1 nach FIG. 1 in einer Position X₁ außerhalb des Detektionsbereiches 4. In dieser Position X₁ werden die Detektoren 7 im Zuge der Durchführung einer Messsequenz vollautomatisch kalibriert. Dies ist möglich, da die Detektoren 7 durch Reststrahlung aus dem Detektionsbereich 4 nicht beeinflusst werden. Eine manuelle Kalibrierung durch Personal ist somit nicht erforderlich. Für weitere Details der Darstellung siehe die Beschreibung zu FIG. 1.

### Bezugszeichenliste

- 1: Detektoranordnung
- 2: Messplattform
- 3: Kugelprobensystem
- 4: Detektionsbereich
- 5: Messtisch
- 6: Messröhre
- 7: Detektor
- 8: Steuereinheit
- 9: Behälter / Instrumentenbox
- 10: Kugelmesssystem

- X: Achsenrichtung
- Y: Achsenrichtung
- Z: Achsenrichtung

## Patentansprüche

1. Kugelmesssystem (10) mit einem Kugelprobensystem (3), welches eine Mehrzahl von die Kugeln aufnehmenden, sich entlang einer Längsrichtung (X) erstreckenden, parallel zueinander ausgerichteten und in Querrichtung (Y) voneinander beabstandeten Röhren (6) aufweist, wobei
• eine Messplattform (2) mit einer Mehrzahl von jeweils einer der Röhren (6) zugeordneten Strahlungsdetektoren (7) vorhanden ist,
• jeder Röhre (6) mehrere, vorzugsweise zwei Strahlungsdetektoren (7) zugeordnet sind,
• die Zuordnung darin besteht, dass der jeweilige Strahlungsdetektor (7) und die ihm zugeordnete Röhre (6) bezüglich der Querrichtung (Y) dieselbe Koordinate besitzen,
• die Messplattform (2) in Längsrichtung (X) relativ zu dem Kugelprobensystem (3) verschiebbar ist.

2. Kugelmesssystem (10) nach Anspruch 1,
wobei die Messplattform (2) in Form eine Balkens (2) ausgebildet ist, welcher die Röhren (6) in Querrichtung (Y) überspannt.

3. Kugelmesssystem (10) nach Anspruch 1 oder 2,
wobei eine Mehrzahl von Strahlungsdetektoren (7) auf der Messplattform (2) in Form einer Matrix gruppiert angeordnet sind.

4. Kugelmesssystem (10) nach einem der Ansprüche 1 bis 3,
wobei ein Behälter (9) zur Aufnahme und zum Transport von Instrumenten mit der Messplattform (2) verbunden ist.

5. Kugelmesssystem (10) nach einem der Ansprüche 1 bis 4,
wobei die Messplattform (2) in eine Position (X₁) verschiebbar ist, in der die Strahlungsdetektoren (7) nicht durch die Strahlung des Kugelprobensystems (3) beeinflusst werden.

6. Kugelmesssystem (10) nach einem der Ansprüche 1 bis 5,
wobei Antriebsmittel zum Verfahren der Messplattform (2) und eine Steuereinheit (8) zur vollautomatischen Durchführung einer Messsequenz vorhanden sind, nach welcher vorgegebene Längspositionen (X₀) mit vorgegebenen Geschwindigkeiten (V₀) angefahren werden.

7. Verfahren zur Messung der Strahlungsverteilung an einer Mehrzahl von radioaktiv aktivierten Kugeln eines Kugelprobensystems (3), welches eine Mehrzahl von die Kugeln aufnehmenden, sich entlang einer Längsrichtung (X) erstreckenden, parallel zueinander ausgerichteten und in Querrichtung (Y) voneinander beabstandeten Röhren (6) aufweist, wobei
• eine Messplattform (2) mit einer Mehrzahl von jeweils einer der Röhren (6) zugeordneten Strahlungsdetektoren (7) vorhanden ist,
• jeder Röhre (6) mehrere, vorzugsweise zwei Strahlungsdetektoren (7) zugeordnet sind,
• die Zuordnung darin besteht, dass der jeweilige Strahlungsdetektor (7) und die ihm zugeordnete Röhre (6) bezüglich der Querrichtung (Y) dieselbe Koordinate besitzen,
• die Messplattform (2) im Verlauf eines Messzyklus in Längsrichtung (X) relativ zu dem Kugelprobensystem (3) verschoben wird,
• und zumindest einer der Strahlungsdetektoren (7) nacheinander eine Serie von Messwerten an verschiedenen Längspositionen (X₀) der ihm zugeordneten Röhre (6) aufnimmt.

8. Verfahren nach Anspruch 7, wobei die jeweilige Längsposition (X₀) derart gewählt wird, dass sie einer Position einer Kugel in der zugeordneten Röhre (6) entspricht.

9. Verfahren nach Anspruch 7 oder 8, wobei zumindest einer der Strahlungsdetektoren (7) beim Verschieben der Messplattform (2) die von den Kugeln abgegebene Strahlung kontinuierlich über einen ausgedehnten Längsabschnitt, vorzugsweise über die gesamte Länge, der ihm zugeordneten Röhre (6) erfasst.

## Claims

1. An ball measuring system (10) with a ball sampling system (3) which includes a plurality of tubes (6) spaced from each other in cross direction (Y), which receive the balls, which extend along a longitudinal direction (X) and which are aligned in parallel to each other, wherein
• a measuring platform (2) with a plurality of radiation detectors (7), each of which is associated with one of the tubes (6), is present,
• several, preferably two, radiation detectors (7) are associated with each tube (6),
• the association consists in that the respective radiation detector (7) and the tube (6) associated therewith possess the same coordinate relative to the cross direction (Y),
• the measuring platform (2) can be slided in longitudinal direction (X) relative to the ball sampling system (3).

2. The ball measuring system (10) of claim 1,
wherein the measuring platform (2) is designed in the form of a bar (2) spanning the tubes (6) in cross direction (Y).

3. The ball measuring system (10) of claim 1 or 2,
wherein a plurality of radiation detectors (7) are arranged on the measuring platform (2), grouped in the form of a matrix.

4. The ball measuring system (10) of any of claims 1 to 3,
wherein a container (9) for receiving and transporting instruments is connected with the measuring platform (2).

5. The ball measuring system (10) of any of claims 1 to 4,
wherein the measuring platform (2) can be slided into a position (X₁), in which the radiation detectors (7) are not influenced by the radiation of the ball sampling system (3).

6. The ball measuring system (10) of any of claims 1 to 5,
wherein driving means for sliding the measuring platform (2) and a control unit (8) for carrying out a measuring sequence fully automatically are present, after which measuring sequence predefined longitudinal positions (X₀) are moved to at predefined speeds (V₀).

7. A method for measuring the radiation distribution on a plurality of radioactively activated balls of a ball sampling system (3) which includes a plurality of tubes (6) spaced from each other in cross direction (Y), which receive the balls, which extend along a longitudinal direction (X) and are aligned in parallel to each other, wherein
• a measuring platform (2) with a plurality of radiation detectors (7), each of which is associated with one of the tubes (6), is present,
• several, preferably two radiation detectors (7) are associated with each tube (6),
• the association consists in that the respective radiation detector (7) and the tube (6) associated therewith possess the same coordinate with regard to the cross direction (Y),
• the measuring platform (2) is slided during a measuring cycle in longitudinal direction (X) relative to the ball sampling system (3),
• and at least one of the radiation detectors (7) picks up a series of measured values, one after the other, at different longitudinal positions (X₀) of the tube (6) associated with it.

8. The method of claim 7, wherein each longitudinal position (X₀) is chosen such that it corresponds to a position of a ball in the associated tube (6)

9. The method of claim 7 or 8, wherein, during the movement of the measuring platform (2), at least one of the radiation detectors (7) continuously picks up the radiation emitted by the balls over an extended longitudinal section, preferably over the entire length, of the tube (6) associated with it.

## Revendications

1. Système de mesure Aeroball (10) avec un système de prélèvement d'échantillons de boules (3) qui comprend une pluralité de tubes (6) espacés l'un de l'autre dans la direction transversale (Y), qui reçoivent les boules, qui s'étendent dans une direction longitudinale (X) et qui sont alignés en parallèle l'un à l'autre, dans lequel
• existe une plateforme de mesure (2) avec une pluralité de détecteurs de rayonnement (7), dont chacun est affecté à l'un des tubes (6),
• plusieurs, de préférence deux, détecteurs de rayonnement (7) sont affectés à chaque tube (6),
• l'affectation consiste en ce que le détecteur de rayonnement (7) respectif et le tube (6) y affecté possèdent la même coordinée relativement à la direction transversale (Y),
• la plateforme de mesure (2) peut être glissée dans la direction longitudinale (X) relativement au système de prélèvement d'échantillons de boules (3).

2. Système de mesure Aeroball (10) selon la revendication 1,
dans lequel la plateforme de mesure (2) est conçue sous forme d'une barre (2) enjambant les tubes (6) dans la direction transversale (Y).

3. Système de mesure Aeroball (10) selon la revendication 1 ou 2,
dans lequel une pluralité de détecteurs de rayonnement (7) est disposée sur la plateforme de mesure (2), groupée sous forme d'une matrice.

4. Système de mesure Aeroball (10) selon l'une quelconque des revendications 1 à 3,
dans lequel un récipient (9) pour recevoir et transporter des instruments est relié avec la plateforme de mesure (2).

5. Système de mesure Aeroball (10) selon l'une quelconque des revendications 1 à 4,
dans lequel la plateforme de mesure (2) peut être glissée dans une position (X₁), dans laquelle les détecteurs de rayonnement (7) ne sont pas influencés par le rayonnement du système de prélèvement d'échantillons de boules (3).

6. Système de mesure Aeroball (10) selon l'une quelconque des revendications 1 à 5,
dans lequel existent des moyens d'entraînement pour glisser la plateforme de mesure (2) et une unité de contrôle (8) pour effectuer une séquence de mesurages de manière entièrement automatique, après laquelle des positions longitudinales (X₀) prédéfinies sont approchées à des vitesses prédéfinies (V₀).

7. Procédé pour mesurer la distribution du rayonnement sur une pluralité de boules activées radioactivement d'un système de prélèvement d'échantillons de boules (3) qui comprend une pluralité de tubes (6) espacés l'un de l'autre dans la direction transversale (Y), qui reçoivent les boules, qui s'étendent dans une direction longitudinale (X) et qui sont alignés en parallèle l'un à l'autre, dans lequel
• existe une plateforme de mesure (2) avec une pluralité de détecteurs de rayonnement (7), dont chacun est affecté à l'un des tubes (6),
• plusieurs, de préférence deux, détecteurs de rayonnement (7) sont affectés à chaque tube (6),
• l'affectation consiste en ce que le détecteur de rayonnement (7) respectif et le tube (6) y affecté possèdent la même coordinée relativement à la direction transversale (Y),
• la plateforme de mesure (2) est glissée, au cours d'un cycle de mesurage, dans la direction longitudinale (X) relativement au système de prélèvement d'échantillons de boules (3),
• et au moins un des détecteurs de rayonnement (7) détecte une série de valeurs mesurées, l'une après l'autre, à des positions longitudinales (X₀) différentes du tube (6) y affecté.

8. Procédé selon la revendication 7, dans lequel chaque position longitudinale (X₀) est choisie de façon à ce qu'elle correspond à une position d'une boule dans le tube (6) affecté.

9. Procédé selon la revendication 7 ou 8, dans lequel, pendant le movement de la plateforme de mesure (2), au moins un des détecteurs de rayonnement (7) détecte de façon continue le rayonnement émis par les boules sur une section longitudinale étendue, de préférence sur la longueur entière, du tube (6) y affecté.
